# EUROPEAN PATENT SPECIFICATION

(11) **EP 4 184 385 B1**
(45) Date of publication and mention of the grant of the patent: **06.08.2025**
(21) Application number: 21209748.9
(22) Date of filing: 23.11.2021
(51) Int. Cl.: G06K 19/077, H01Q 1/22, B60R 13/10

(54) **AN INFORMATION PLATE AND A METHOD FOR MANUFACTURING THE INFORMATION PLATE**
INFORMATIONSPLATTE UND VERFAHREN ZUR HERSTELLUNG DER INFORMATIONSPLATTE
PLAQUE D'INFORMATIONS ET PROCÉDÉ DE FABRICATION DE LA PLAQUE D'INFORMATIONS

(43) Date of publication of application: 24.05.2023
(73) Proprietor: Porta Saber Lda, 2710-693 Sintra (PT)
(72) Inventor: Guimarães, Óscar, 2645-488 Alcabideche (PT); Izzatdust, Elzad, 2750-368 Cascais (PT)
(74) Representative: Koivisto, Harri Kristian

(56) References cited:
- EP-A1- 1 903 531
- WO-A2-2010/080778
- CN-U- 214 280 188

## Description

### BACKGROUND

Electronic short and medium-range wireless identification devices, such as RFID transponders are connected to information plates to provide a quick contactless identification method. The identification may be done for various purposes, such as road tolls, parking fees or security purposes. Examples of information plates are license plates for road vehicles, road traffic signals, road name signals or building numbers. The information plates may be used to tag an electronic identity on the item it is attached to.

One exemplary identification technology, Radio Frequency Identification (RFID) uses electromagnetic fields to identify and track transponders or tags that may be attached to objects, wherein the transponders may contain electronically stored information. An RFID system has transponders and readers configured to interact at a predefined frequency. Radio frequency identification tags, labels or transponders may be thin and flexible, suitable for being attached or embedded into various objects.

Passive RFID transponders may collect energy from a nearby RFID reader's magnetic field or propagating radio waves. They may lack an internal power source, instead relying on the externally generated power which may be created by a resonant circuit that is attached to the transponder or to a microchip providing further functions.

Information plates are manufactured in large quantities. Having the wireless identification device, such as the RFID transponder, embedded into the information plate complicates the manufacturing process, as the simple and sturdy information plate is combined with a sensitive electronic device. The completed information plate must withstand harsh conditions, for example at the front of the vehicle. Weatherproofing the assembly may increase the manufacturing costs.

CN214280188U discloses a combined RFID tag antenna, with a metal license plate, a slot antenna, a chip and a Printed Circuit Board. The slot antenna is arranged on the metal license plate and the chip is fixedly connected with the PCB, a bonding pad is fixedly arranged at the bottom end of the PCB, and the PCB is fixedly connected with the metal license plate through the bonding pad.

EP1903531A1 discloses a device for vehicle identification, comprising a license plate for a vehicle, wherein the license plate is made of electrically conductive material and provided with a transponder, particularly an RFID chip, wherein the transponder with both connections is electrically coupled to the material of the license plate and wherein the license plate is provided with a slot-shaped recess, wherein both connections at opposite sides of the slot-shaped recess are coupled to the license plate.

WO2010080778 discloses an electrically conductive, RFID-enabled signage that includes an electrically conductive article including an opening and an assembled device that is coupled to the electrically conductive article to provide RFID functionality to the electrically conductive article.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

An information plate having an embedded wireless identity transponder and the manufacturing process of the information plate assembly are described hereinafter. The information plate body has a cavity or a slot for a wireless identification device. The wireless identification device is attached to a flexible layer, a pre-processed layer carrying the sensitive wireless identification device to the information plate. The flexible layer comprising the wireless identification device forms a smart film structure that does not, per se, possess full wireless identity transponder functionalities. The flexible layer is attached on the information plate body from a roll of flexible layer, with the wireless identification device being placed over the cavity. The wireless identification device has at least two connecting pins that extend to be in contact with the information plate body.

The information plate body is made of electrically conductive material, such as metal. Placing the connecting pins against the information plate body completes the wireless identification device's electric circuit. The information plate body is a functional part of the wireless identity transponder. The wireless identity transponder may be functional only after the information plate body completing the electric circuit. One example of the wireless identity transponder is a RFID transponder. In one embodiment, the wireless identity transponder is configured to operate at UHF frequencies. In one embodiment, the wireless identity transponder applies near field communication technology, NFC.

The cavity is be filled with a suitable filler material before placing the flexible layer on top of the information plate body. The filler material secures the RFID device in place and improves the reliability and/or durability of the assembly. The flexible layer may comprise durable material, reflective material or provide additional functionality to the information plate. The manufacturing method is fast and reliable, lowering the overall costs of producing robust information plates.

Exemplary implementations for the information plate relate to handling an electronic identity of the object carrying the information plate. The object may be stationary or moving. In one embodiment the information plate is a license plate attached to a road vehicle, wherein the information may be used to track the vehicle and the vehicle information on the road, collect road tolls or parking fees. Other embodiments may relate to keeping track of the property carrying the information plate, inventory, security, theft prevention or other implementations.

Many of the attendant features will be more readily appreciated as they become better understood by reference to the following detailed description considered in connection with the accompanying drawings. The embodiments described below are not limited to implementations which solve any or all the disadvantages of known information plates having embedded wireless identity transponders, RFID transponders or the manufacture thereof.

### BRIEF DESCRIPTION OF THE DRAWINGS

The present description will be better understood from the following detailed description read in light of the accompanying drawings, wherein
FIG. 1 illustrates schematically simplified selected steps of the method for manufacturing the information plate;
FIG. 2 illustrates schematically an isometric view of an assembly line for manufacturing information plates;
FIG. 3 illustrates schematically an isometric view of the assembly line for manufacturing information plates, wherein a flexible layer comprises conductive material;
FIG. 4 illustrates as a flowchart having steps of the method for manufacturing the information plate;
FIG. 5a illustrates schematically one exemplary placement of an identification device over a cavity of an information plate body; and
FIG. 5b illustrates schematically one exemplary placement of the identification device over the cavity.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

Although the present examples are described and illustrated herein as being implemented as a wireless identification transponder, RFID tag or RFID transponder, the wireless identification device described is provided as an example and not a limitation. In one embodiment, the wireless identity transponder applies near field communication technology, NFC. The RFID transponder is one example of the wireless identification transponder. In one exemplary embodiment the RFID transponder is used at a UHF frequency spectrum from 860 to 960 MHz. In one exemplary embodiment the RFID transponder is used at a microwave frequency spectrum of 2.45 GHz and/or 5.8 GHz. Within this document, the RFID tag and the RFID transponder have the same meaning. As those skilled in the art will appreciate, the present examples are suitable for application in a variety of different types of information plates for vehicles, mobile objects or stationary objects. An information plate, a number plate or any vehicle identification plate are examples of suitable applications for the wireless identification transponder disclosed herein. Vehicles may be cars, trucks, cargo equipment or watercraft and the mobile wireless identification transponder may be configured to communicate with a stationary reader. One example of the information plate is a license plate. Typically, information plates are placed outside the vehicle for providing visual information.

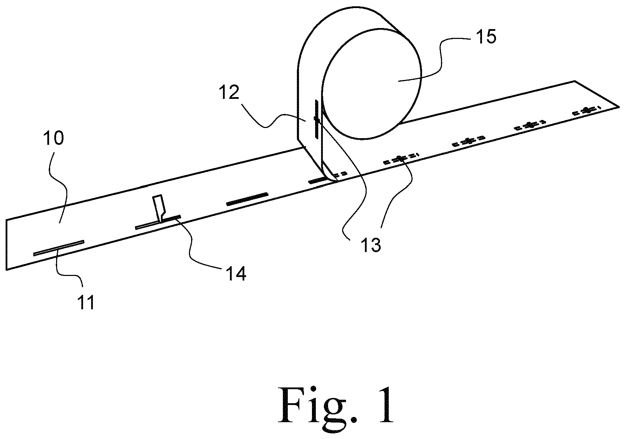

FIG. 1 illustrates schematically an isometric view of simplified and selected steps of the method for manufacturing the information plate. An information plate body 10 is illustrated as a bulk plate from where several information plates may be cut out. The information plate body 10 is made of electrically conductive material. In one embodiment, the information plate body is made of metal, for example steel, aluminium or metal alloy. In one embodiment, the information plate is made of electrically conductive plastic or composite material. In one embodiment the information plate body 10 is made of non-conductive material and has a layer or a coating of electrically conductive material.

A cavity 11 is formed into the information plate body 10. In one embodiment, the cavity 11 is an opening in the information plate body 10. The cavity 11 may be formed by cutting, drilling or punching through the information plate body 10. In one embodiment, the cavity 11 is a recess in the information plate body 10 that may be formed, for example, by stamping the information plate body 10. In one embodiment, the information plate body 10 is a multi-layer board comprising at least one non-conductive layer and at least one conductive layer and the cavity 11 is formed by removing a portion of conductive material from the information plate body 10. If the information plate body 10 comprises multiple conductive layers, the cavity 11 may be formed by removing portion of one conductive layer. In one embodiment, the cavity 11 is formed by removing portion of all conductive layers on the same position.

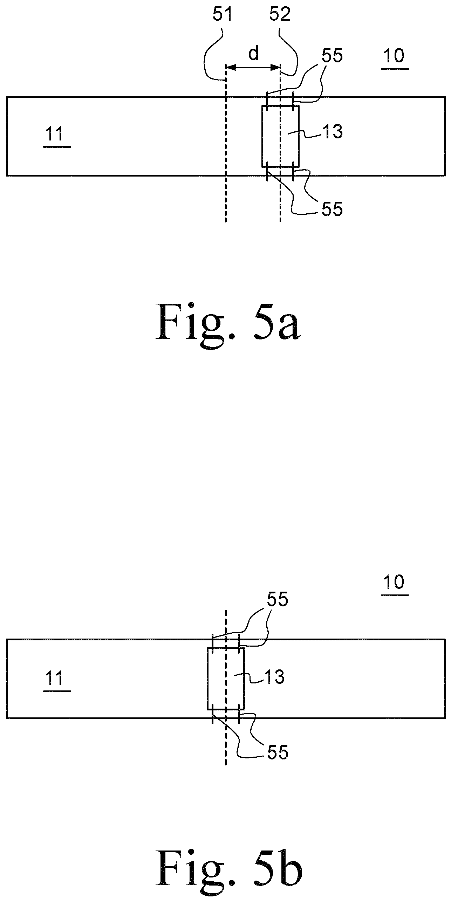

The cavity 11 comprises suitable width for accommodating a wireless identification device 13. The wireless identification device 13 comprises at least two connecting pins 55, shown in FIG 5a, that are configured to be in contact with the information plate body 10 while the wireless identification device 13 resides in the cavity 11. In one embodiment, the connecting pins 55 extend to opposite sides of the cavity 11. The cavity 11 is configured to function as part of a radio frequency antenna for the wireless identification device 13, wherein the length, width and/or shape of the cavity 11 may be selected to perform at a predefined frequency. One example of the predefined frequency is suitable for RFID communication with travelling vehicles and stationary RFID readers. The size and shape of the cavity 11 may be designed according to the parameters derived from the size of the wireless identification device 13, the required read range of the information plate application, thickness of the wireless identification device 13, characteristics of the metallic layer, characteristics of the information plate body 10 and/or the required frequency. The cavity 11 may comprise multiple recesses and/or openings.

The wireless identification device 13 is positioned onto a flexible layer 12. In one embodiment, the flexible layer 12 comprises an adhesive surface, configured to hold the wireless identification device 13 in place during the assembly. In one embodiment, the wireless identification device 13 is attached to the flexible layer 12 by an adhesive that is placed onto the flexible layer 12. In the present example, the flexible layer 12 is released from a roll 15. Multiple wireless identification devices 13 are positioned onto the flexible layer 12, to be later placed over consecutive cavities 11. After placing the wireless identification device 13 onto the flexible layer 12, its connecting pins 55 are exposed to the side facing the information plate body 10.

In one embodiment, the cavity 11 is filled by a filler material 14 before attaching the flexible layer 12 onto the information plate body 10. The filler material 14 is a non-conductive material. The filler material 14 may cure after the wireless identification device 13 has been placed into the cavity 11. In one embodiment, the filler material 14 is configured to secure the wireless identification device 13 firmly into the cavity 11 and provide further protection for the wireless identification device 13.

The flexible layer 12 is attached, together with the wireless identification device 13, to the information plate body 10. The wireless identification device 13 is positioned over the cavity 11. The at least two connecting pins 55 come into contact with the information plate body 10. In one embodiment, the contact between the wireless identification device 13 connecting pin 55 and the information plate body 10 is enhanced by a drop of conductive paste. The electric circuit of the wireless identification device 13 is completed once the connecting pins 55 are connected to the conductive surface of the information plate body 10, thereby forming the wireless identification transponder. The flexible layer 12 is in one embodiment pre-cut to match the surface of a finalized information plate 25.

The wireless identification transponder may not be functional prior to completion of the electric circuit. Therefore, in one embodiment, the wireless identification devices 13 are not functional via the radio interface when they are placed on the storage, on the feeder on the assembly line or at the flexible layer 12. This mitigates the risk of tampering or eavesdropping the data stored at the wireless identification device 13. In one embodiment, the wireless identification transponder is registered as a functional entity only after full assembly.

In the example of FIG. 1 the portion of flexible layer 12 being in contact with the wireless identification device 13 is electrically non-conductive. In the final assembly the flexible layer may cover the whole wireless identification device 13. In one embodiment, the flexible layer 12 covers the information plate body 10 partially - as one example, an outer edge of the flexible layer 12 may be 50 mm from the outer edge of the information edge body 10. The non-conductive flexible layer 12 allows radio waves to travel through, enabling the wireless identification device 13 to receive and transmit information. The flexible layer 12 may comprise visual information, a registration number, a reflective material to enhance the visibility of the information plate or any other visual or functional feature. In one embodiment the flexible layer 12 is transparent, allowing the visual information of the information plate body 10 to be seen through. In one embodiment, the flexible layer 12 is opaque. The flexible layer 12 is the top layer or outside layer of the fully assembled information plate.

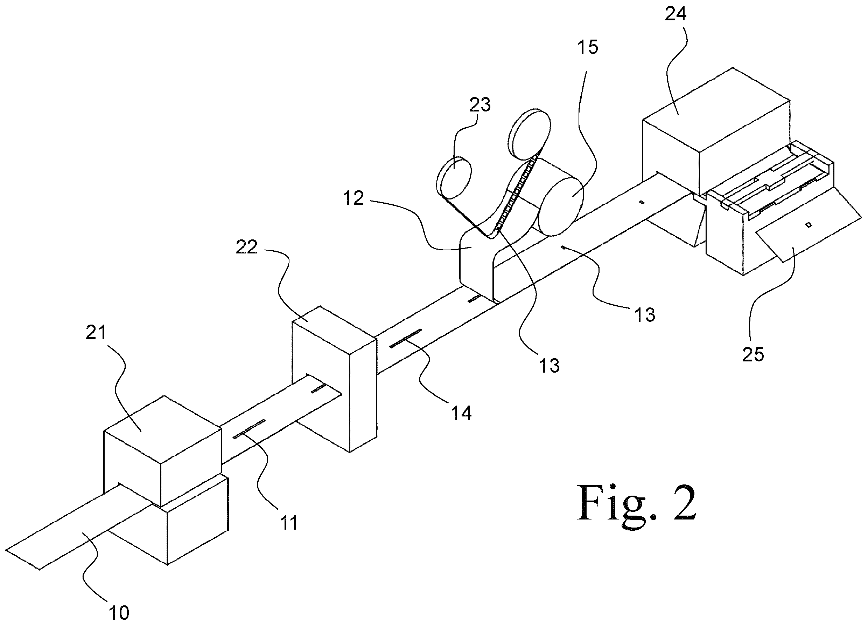

FIG. 2 illustrates schematically an isometric view of an assembly line for manufacturing information plates 25. In this example, the production travels from left to right. A first stage on the assembly line is a cutting station 21 for cutting the cavity 11 to the bulk sheet of information plate body 10. The distance between two consecutive cavities 11 is stored to a controlling computer of the assembly line, as part of the layout of the final information plate. Size of the cavity 11 may be selected to match the desired radio frequency. The cavity 11 may be cut by known methods. The first stage in the assembly line may also be used to stamp shapes to the information plate body 10.

A second stage on the assembly line is a filler station 22 for filling the cavity 11 with the filler material 14. The controlling computer may set the amount of filler material to match the size of the cavity 11. The filler material 14 may not cure until the information plate 25 is finalized or before the wireless identification device 13 is placed into the cavity 11. Later stage of the assembly line may comprise means for curing the filler material 14, for example by heat or by ultraviolet radiation.

A third stage on the assembly line comprises placing the rest of the components onto the information plate body 10. The flexible layer 12 is fed from a roll 15. The controlling computer is configured to place the wireless identification device 13 to the flexible layer 12, into the position matching the cavity 11 on the bulk sheet of information plate body 10. The wireless identification device 13 is received from a feeder roll 23. As the assembly proceeds, the flexible layer 12 is laid on the information plate body 10 as a continuous process. The flexible layer 12 may be matched with the wireless identification device 13 at a separate place, wherein the distance between consecutive wireless identification devices 13 is predefined to match the distance between consecutive cavities 11. In one embodiment, the controlling computer comprises means for cutting the cavities 11 along the detected positions of consecutive wireless identification devices 13 on the roll 15 of flexible layer 12.

The fourth stage on the assembly line comprises cutting the information plate 25 from the bulk sheet. The complete information plate 25 is received from the cutting station 24. The cutting station 24 may comprise testing the functionality of the information plate 25, as it is the first stage where the radio interface of the information plate 25 is fully functional. The cutting station 24 may comprise registration functions for the electronic identification data, such as RFID data, and assign the identification data with the physical identification plate.

One exemplary embodiment of the complete information plate comprises the information plate body 10 made of electrically conductive material, the cavity 11 at the information plate body 10, and the wireless identification device 13 positioned over the cavity 11. The wireless identification device 13 comprises at least two connecting pins 55 connected to the information plate body 10 surrounding the cavity 11. In one embodiment the connecting pins 55 are connected at opposite sides of the cavity 11. The cavity 11 comprises cured filler material 14 configured to fill the space between the wireless identification device 13 and the information plate body 10. The flexible layer 12 may by itself comprise multiple layers. The non-conductive flexible layer 12 may cover the entire wireless identification device 13. If the flexible layer 12 comprises conductive material, an opening 31 matching the cavity 11 is formed to the conductive material to enable the radio antenna function of the cavity 11. In one embodiment, the flexible layer 12 comprises the non-conductive flexible layer and a conductive layer, wherein the opening 31 is formed only to the conductive layer and the non-conductive layer remains intact.

Electrically conductive portion of the flexible layer 12 may provide functionality to the radio antenna. The conductive portion is configured to cover at least the connecting pins 55 of the wireless identification device 13. The information plate body 10 completes the electric circuit of the wireless identification device 13. The information plate body 10 and the wireless identification device 13 form together the wireless identification transponder.

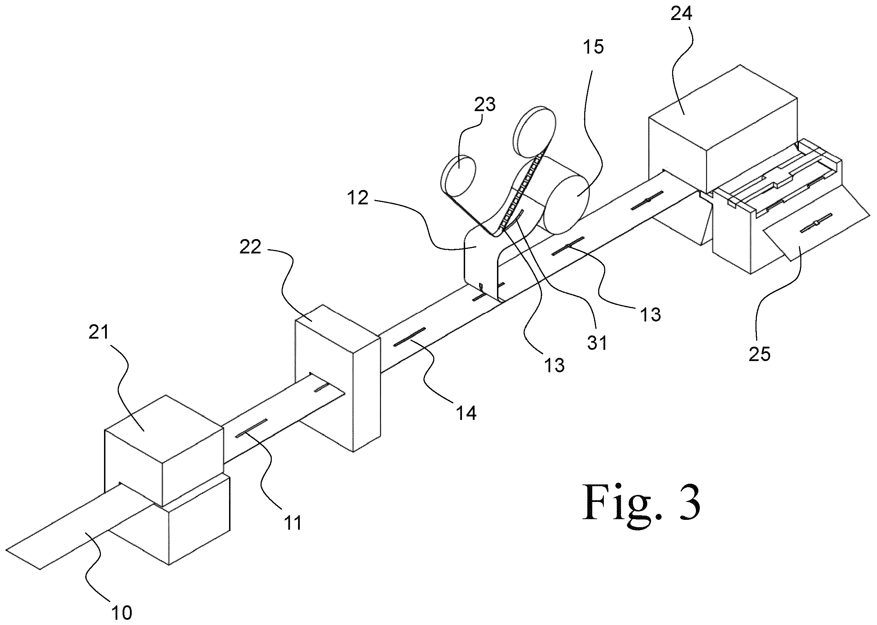

FIG. 3 illustrates schematically an isometric view of the assembly line for manufacturing information plates 25, wherein the flexible layer 12 comprises conductive material. The difference to the previous example is the opening 31 configured to prevent blocking the radio transmission.

In some embodiments the sequence of the stages may be altered. In one embodiment, the filler station 22 for filling the cavity 11 with the filler material 14 is positioned after cutting the information plate 25 from the bulk sheet. In one embodiment, the information plate body 10 is cut into shape and separated from the bulk sheet before placing the flexible layer 12 onto the information plate body 10. In one embodiment, the bulk sheet comprises cavities 11 before entering the assembly line.

FIG. 5a illustrates schematically one exemplary placement of the identification device 13 over the cavity 11. In one exemplary embodiment, a second symmetrical axis 52 of the wireless identification device 13 is at a distance d between 1 and 40 mm from a first symmetrical axis 51 of the cavity 11. In one embodiment, the distance d is between 1 and 20 mm. In one embodiment, the distance d is between 10 and 30 mm. In one embodiment, the distance d is between 5 and 15 mm. The asymmetrical placement of the distance d may occur at either side of the first symmetrical axis 51. The first symmetrical axis 51 and the second symmetrical axis 52 are parallel in these exemplary embodiments. **In** one embodiment, the asymmetrical placement of the identification device 13 improves performance of the wireless identification transponder. **In** one exemplary embodiment the improved performance occurs at 10 mm asymmetrical placement. Examples of the improved performance are improved antenna gain or improved antenna radiation pattern.

FIG. 5b illustrates schematically one alternative exemplary placement of the identification device 13 over the cavity 11, wherein the first symmetrical axis 51 and the second symmetrical axis 52 are parallel and overlap. **In** one exemplary embodiment, the cavity 11 is shaped asymmetrically.

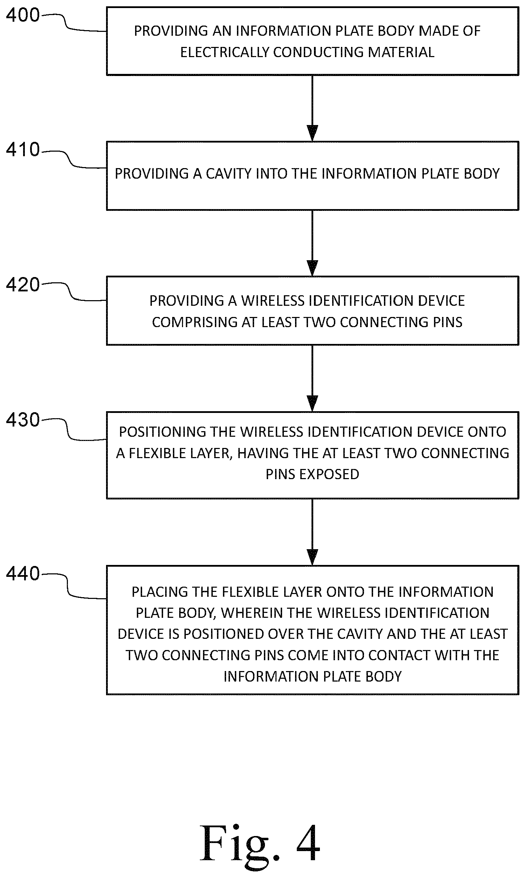

FIG. 4 illustrates as a flowchart the steps of the method for manufacturing the information plate 25. Step 400 comprises providing the information plate body 10 made of electrically conductive material. Step 410 comprises providing a cavity 11 into the information plate body 10. Step 420 comprises providing a wireless identification device 13 comprising at least two connecting pins 55. Step 430 comprises positioning the wireless identification device 13 onto a flexible layer 12, having the at least two connecting pins 55 exposed. Step 440 comprises placing the flexible layer 12 onto the information plate body 10, wherein the wireless identification device 13 is positioned over the cavity 11 and the at least two connecting pins 55 come into contact with the information plate body 10.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the invention is defined by the appended claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method for manufacturing an information plate having a wireless identification transponder:
**c h a r a c t e r i z e d** in that the method comprises the steps of:
providing an information plate body (10) made of electrically conductive material;
providing a cavity (11) into the information plate body (10);
providing a wireless identification device (13) comprising at least two connecting pins (55);
positioning the wireless identification device (13) onto a flexible layer (12), having the at least two connecting pins (55) exposed;
placing the flexible layer (12) onto the information plate body (10) from a roll of flexible layer (12), wherein the wireless identification device (13) is positioned over the cavity (11) and the at least two connecting pins (55) come into contact with the information plate body (10).

2. A method for manufacturing an information plate according to claim 1, **characterized in that** the step of providing a cavity (11) into the information plate body (10) comprises cutting an opening into the information plate body (10), wherein the opening is the cavity (11).

3. A method for manufacturing an information plate according to claim 1 or 2, **characterized by** filling the cavity (11) by a filler material (14) before placing the flexible layer (12) onto the information plate body (10).

4. A method for manufacturing an information plate according to any of the claims 1 to 3, **characterized by** having the information plate body (10) as a sheet of electrically conductive material and cutting the information plate body (10) off the sheet after placing the flexible layer (12) onto the information plate body (10).

5. A method for manufacturing an information plate according to any of the claims 1 to 4, **characterized in that** the method comprises the step of feeding the wireless identification device (13) to an exposed portion of the roll of flexible layer (12) before placing the flexible layer (12) onto the information plate body (10).

6. A method for manufacturing an information plate according to any of the claims 1 to 5, c**haracterized** in the method comprises the step of completing a electric circuit of the wireless identification device (13) when the at least two connecting pins (55) come into contact with the information plate body (10) and providing the wireless identification transponder.

7. A method for manufacturing an information plate according to any of the claims 1 to 6, **characterized in that** the method comprises the step of placing a second symmetrical axis (52) of the wireless identification device (13) to a distance between 1 and 40 mm from a first symmetrical axis (51) of the cavity (11).

8. A method for manufacturing an information plate according to any of the claims 1 to 7, **characterized in that** the cavity (11) is a functional part of the wireless identification device (13) antenna when the information plate is assembled.

9. A method for manufacturing an information plate according to any of the claims 1 to 8, **characterized in that** the material of the flexible layer (12) being in contact with the wireless identification device (13) is electrically non-conductive.

10. An information plate, comprising:
an information plate body (10) made of electrically conductive material;
a cavity (11) at the information plate body (10);
a wireless identification device (13) positioned over a cavity (11); and
the wireless identification device (13) comprises at least two connecting pins (55) connected to the information plate body (10) surrounding the cavity (11);
**characterized in that**;
the cavity (11) comprises a filler material (14) configured to fill the space between the wireless identification device (13) and the information plate body (10); and
the information plate comprises a flexible layer (12), made of rollable material, over the information plate body (10) and, at least partially, over the wireless identification device (13);
wherein the information plate body (10) completes an electric circuit of the wireless identification device (13); and
the information plate body (10) and the wireless identification device (13) together provide the wireless identification transponder.

11. An information plate according to claim 10, **characterized in that** a second symmetrical axis (52) of the wireless identification device (13) is at a distance between 1 and 40 mm from a first symmetrical axis (51) of the cavity (11).

12. An information plate according to claim 10 or claim 11,
**characterized in that** the cavity (11) is a functional part of the wireless identification device (13) antenna.

## Patentansprüche

1. Verfahren zur Herstellung einer Informationsplatte mit einem drahtlosen Identifikationstransponder:
**dadurch gekennzeichnet, dass** das Verfahren die folgenden Schritte umfasst:
Bereitstellen eines Informationsplattenkörpers (10) aus elektrisch leitfähigem Material;
Bereitstellen eines Hohlraums (11) im Informationsplattenkörper (10);
Bereitstellen eines drahtlosen Identifikationsgeräts (13), das mindestens zwei Verbindungsstifte (55) umfasst;
Positionieren des drahtlosen Identifikationsgeräts (13) auf einer flexiblen Schicht (12), wobei die mindestens zwei Verbindungsstifte (55) freiliegen;
Platzieren der flexiblen Schicht (12) von einer Rolle flexibler Schicht (12) auf den Informationsplattenkörper (10), wobei das drahtlose Identifikationsgerät (13) über dem Hohlraum (11) positioniert wird und die mindestens zwei Verbindungsstifte (55) mit dem Informationsplattenkörper (10) in Kontakt kommen.

2. Verfahren zur Herstellung einer Informationsplatte nach Anspruch 1, **dadurch gekennzeichnet, dass** der Schritt des Bereitstellens eines Hohlraums (11) im Informationsplattenkörper (10) das Schneiden einer Öffnung in den Informationsplattenkörper (10) umfasst, wobei die Öffnung der Hohlraum (11) ist.

3. Verfahren zur Herstellung einer Informationsplatte nach Anspruch 1 oder 2, **gekennzeichnet durch** das Füllen des Hohlraums (11) mit einem Füllmaterial (14), bevor die flexible Schicht (12) auf den Informationsplattenkörper (10) platziert wird.

4. Verfahren zur Herstellung einer Informationsplatte nach einem der Ansprüche 1 bis 3, **dadurch gekennzeichnet, dass** der Informationsplattenkörper (10) als Platte aus elektrisch leitfähigem Material vorliegt und der Informationsplattenkörper (10) nach dem Platzieren der flexiblen Schicht (12) auf den Informationsplattenkörper (10) von der Platte abgeschnitten wird.

5. Verfahren zur Herstellung einer Informationsplatte nach einem der Ansprüche 1 bis 4, **dadurch gekennzeichnet, dass** das Verfahren den Schritt des Zuführens des drahtlosen Identifikationsgeräts (13) zu einem freiliegenden Abschnitt der Rolle der flexiblen Schicht (12) umfasst, bevor die flexible Schicht (12) auf dem Informationsplattenkörper (10) platziert wird.

6. Verfahren zur Herstellung einer Informationsplatte nach einem der Ansprüche 1 bis 5, **dadurch gekennzeichnet, dass** das Verfahren den Schritt des Schließens eines Stromkreises des drahtlosen Identifikationsgeräts (13), wenn die mindestens zwei Verbindungsstifte (55) mit dem Informationsplattenkörper (10) in Kontakt kommen, und des Bereitstellens des drahtlosen Identifikationstransponders umfasst.

7. Verfahren zur Herstellung einer Informationsplatte nach einem der Ansprüche 1 bis **6, dadurch gekennzeichnet, dass** das Verfahren den Schritt umfasst, eine zweite Symmetrieachse (52) des drahtlosen Identifikationsgeräts (13) in einem Abstand zwischen 1 und 40 mm von einer ersten Symmetrieachse (51) des Hohlraums (11) zu platzieren.

8. Verfahren zur Herstellung einer Informationsplatte nach einem der Ansprüche 1 bis 7, **dadurch gekennzeichnet, dass** der Hohlraum (11) beim Zusammenbau der Informationsplatte ein funktionaler Teil der Antenne des drahtlosen Identifikationsgeräts (13) ist.

9. Verfahren zur Herstellung einer Informationsplatte nach einem der Ansprüche 1 bis 8, **dadurch gekennzeichnet, dass** das Material der flexiblen Schicht (12), die mit dem drahtlosen Identifikationsgerät (13) in Kontakt steht, elektrisch nicht leitend ist.

10. Informationsplatte, umfassend:
einen Informationsplattenkörper (10) aus elektrisch leitfähigem Material;
einen Hohlraum (11) am Informationsplattenkörper (10);
ein drahtloses Identifikationsgerät (13), das über einem Hohlraum (11) positioniert ist; und
das drahtlose Identifikationsgerät (13) mindestens zwei Verbindungsstifte (55) umfasst, die mit dem den Hohlraum (11) umgebenden Informationsplattenkörper (10) verbunden sind;
**dadurch gekennzeichnet, dass**:
der Hohlraum (11) ein Füllmaterial (14) umfasst, das den Raum zwischen dem drahtlosen Identifikationsgerät (13) und dem Informationsplattenkörper (10) ausfüllt; und
die Informationsplatte eine flexible Schicht (12) aus aufrollbarem Material über dem Informationsplattenkörper (10) und zumindest teilweise über dem drahtlosen Identifikationsgerät (13) umfasst;
wobei der Informationsplattenkörper (10) einen Stromkreis des drahtlosen Identifikationsgeräts (13) schließt; und
der Informationsplattenkörper (10) und das drahtlose Identifikationsgerät (13) zusammen den drahtlosen Identifikationstransponder bilden.

11. Informationsplatte nach Anspruch 10, **dadurch gekennzeichnet, dass** eine zweite Symmetrieachse (52) des drahtlosen Identifikationsgeräts (13) einen Abstand zwischen 1 und 40 mm von einer ersten Symmetrieachse (51) des Hohlraums (11) aufweist.

12. Informationsplatte nach Anspruch 10 oder 11, **dadurch gekennzeichnet, dass** der Hohlraum (11) ein funktionaler Teil der Antenne des drahtlosen Identifikationsgeräts (13) ist.

## Revendications

1. Procédé de fabrication d'une plaque d'information présentant un transpondeur d'identification sans fil :
**caractérisé en ce que** le procédé comprend les étapes de :
fourniture d'un corps de plaque d'information (10) constitué d'un matériau conducteur d'électricité ;
fourniture d'une cavité (11) dans le corps de plaque d'information (10) ;
fourniture d'un dispositif d'identification sans fil (13) comprenant au moins deux broches de connexion (55) ;
positionnement du dispositif d'identification sans fil (13) sur une couche flexible (12), présentant au moins deux broches de connexion (55) exposées ;
mise en place de la couche flexible (12) sur le corps de plaque d'information (10) à partir d'un rouleau de couche flexible (12), dans lequel le dispositif d'identification sans fil (13) est positionné au-dessus de la cavité (11) et les au moins deux broches de connexion (55) entrent en contact avec le corps de plaque d'information (10).

2. Procédé de fabrication d'une plaque d'information selon la revendication 1, **caractérisé en ce que** l'étape de fourniture d'une cavité (11) dans le corps de plaque d'information (10) comprend la découpe d'une ouverture dans le corps de plaque d'information (10), dans lequel l'ouverture est la cavité (11).

3. Procédé de fabrication d'une plaque d'information selon la revendication 1 ou 2, **caractérisé par** le remplissage de la cavité (11) par un matériau de remplissage (14) avant la mise en place de la couche flexible (12) sur le corps de plaque d'information (10).

4. Procédé de fabrication d'une plaque d'information selon l'une quelconque des revendications 1 à 3, **caractérisé en ce que** le corps de plaque d'information (10) est une feuille de matériau conducteur d'électricité et **en ce que** le corps de plaque d'information (10) est découpé de la feuille après la mise en place de la couche flexible (12) sur le corps de plaque d'information (10).

5. Procédé de fabrication d'une plaque d'information selon l'une quelconque des revendications 1 à 4, **caractérisé en ce que** le procédé comprend l'étape d'acheminement du dispositif d'identification sans fil (13) sur une partie exposée du rouleau de couche flexible (12) avant la mise en place de la couche flexible (12) sur le corps de plaque d'information (10).

6. Procédé de fabrication d'une plaque d'information selon l'une quelconque des revendications 1 à 5, **caractérisé en ce que** le procédé comprend l'étape de fermeture d'un circuit électrique du dispositif d'identification sans fil (13) lorsque les au moins deux broches de connexion (55) entrent en contact avec le corps de plaque d'information (10) et de fourniture du transpondeur d'identification sans fil.

7. Procédé de fabrication d'une plaque d'information selon l'une quelconque des revendications 1 à 6, **caractérisé en ce que** le procédé comprend l'étape de mise en place d'un second axe de symétrie (52) du dispositif d'identification sans fil (13) à une distance comprise entre 1 et 40 mm d'un premier axe de symétrie (51) de la cavité (11).

8. Procédé de fabrication d'une plaque d'information selon l'une quelconque des revendications 1 à 7, **caractérisé en ce que** la cavité (11) est une partie fonctionnelle de l'antenne du dispositif d'identification sans fil (13) lorsque la plaque d'information est assemblée.

9. Procédé de fabrication d'une plaque d'information selon l'une quelconque des revendications 1 à 8, **caractérisé en ce que** le matériau de la couche flexible (12) en contact avec le dispositif d'identification sans fil (13) n'est pas conducteur d'électricité.

10. Plaque d'information, comprenant :
un corps de plaque d'information (10) constitué d'un matériau conducteur d'électricité ;
une cavité (11) au niveau du corps de plaque d'information (10) ;
un dispositif d'identification sans fil (13) positionné au-dessus d'une cavité (11) ; et
le dispositif d'identification sans fil (13) comprend au moins deux broches de connexion (55) connectées au corps de plaque d'information (10) entourant la cavité (11) ;
**caractérisé en ce que** ;
la cavité (11) comprend un matériau de remplissage (14) configuré pour remplir l'espace entre le dispositif d'identification sans fil (13) et le corps de plaque d'information (10) ; et
la plaque d'information comprend une couche flexible (12), constituée d'un matériau pouvant être enroulé, au-dessus du corps de plaque d'information (10) et, au moins partiellement, au-dessus du dispositif d'identification sans fil (13) ;
dans lequel le corps de plaque d'information (10) boucle un circuit électrique du dispositif d'identification sans fil (13) ; et
le corps de plaque d'information (10) et le dispositif d'identification sans fil (13) fournissent ensemble le transpondeur d'identification sans fil.

11. Plaque d'information selon la revendication 10, **caractérisée en ce qu'**un second axe de symétrie (52) du dispositif d'identification sans fil (13) est à une distance comprise entre 1 et 40 mm d'un premier axe de symétrie (51) de la cavité (11).

12. Plaque d'information selon la revendication 10 ou la revendication 11,
**caractérisée en ce que** la cavité (11) est une partie fonctionnelle de l'antenne du dispositif d'identification sans fil (13).
